# EUROPEAN PATENT SPECIFICATION

(11) **EP 4 554 186 B1**
(45) Date of publication and mention of the grant of the patent: **14.10.2026**
(21) Application number: 24207831.9
(22) Date of filing: 21.10.2024
(51) Int. Cl.: H04L 67/00, H04W 12/50, H04W 12/55, G06F 3/14, H04W 12/06, H04N 7/18, H04L 67/141

(54) **DISPLAY DEVICE PAIRING METHOD AND DISPLAY DEVICE MANAGEMENT SYSTEM**
ANZEIGEVORRICHTUNGSPAARUNGSVERFAHREN UND ANZEIGEVORRICHTUNGSVERWALTUNGSSYSTEM
PROCÉDÉ D'APPARIEMENT DE DISPOSITIFS D'AFFICHAGE ET SYSTÈME DE GESTION DE DISPOSITIFS D'AFFICHAGE

(30) Priority: 13.11.2023 TW 112143598
(43) Date of publication of application: 14.05.2025
(73) Proprietor: Optoma Coporation, New Taipei City 231633 (TW)
(72) Inventor: Hong, Cheng-Wei, New Taipei City 231633 (TW)
(74) Representative: Ter Meer und Partner mbB

(56) References cited:
- WO-A1-2022/211983
- CN-A- 109 302 440
- US-B2- 10 032 431
- RING: "How to Set Up Your Ring Video Doorbell | Ring", 23 December 2016 (2016-12-23), XP093229436, Retrieved from the Internet <URL:https://www.youtube.com/watch?v=9yTg-iWPy28> [retrieved on 20241202]
- BOT HOME AUTOMATION INC.: "Ring Video Doorbell", 19 January 2018 (2018-01-19), pages 1 - 2, XP093229438, Retrieved from the Internet <URL:https://www.truehomeprotection.com/wp-content/uploads/2019/02/Ring-Doorbell-User-Manual.pdf> [retrieved on 20241202]
- ANONYMOUS: "AirServer - The Most Advanced AirPlay, Miracast and Google Cast receiver for Mac, PC and Xbox One", 25 March 2023 (2023-03-25), pages 1 - 3, XP093229457, Retrieved from the Internet <URL:https://web.archive.org/web/20230325052841/https://www.airserver.com/de> [retrieved on 20241202]
- SYNOLOGY INC.: "Media Server - Add-on Packages | Synology Inc.", 9 August 2023 (2023-08-09), pages 1 - 3, XP093229470, Retrieved from the Internet <URL:https://web.archive.org/web/20230809082628/https://www.synology.com/en-global/dsm/packages/MediaServer> [retrieved on 20241202]
- ANONYMOUS: "MAC address - Wikipedia", 26 May 2023 (2023-05-26), pages 1 - 11, XP093229699, Retrieved from the Internet <URL:https://en.wikipedia.org/w/index.php?title=MAC_address&oldid=1157093981> [retrieved on 20241202]
- ANONYMOUS: "Internet checksum - Wikipedia", 27 February 2023 (2023-02-27), pages 1 - 3, XP093229701, Retrieved from the Internet <URL:https://en.wikipedia.org/w/index.php?title=Internet_checksum&oldid=1141968161> [retrieved on 20241202]

## Description

This application claims priority from Taiwan application serial no. 112143598, filed on November 13, 2023

### BACKGROUND

### Technical Field

The disclosure relates to a pairing technology for electronic devices, and particularly relates to a display device pairing method and a display device management system.

### Description of Related Art

In the era of rapid technological development, people's demands for efficiency and precision are increasing. However, traditional display device pairing operation processes and display device management systems still have many limitations, which greatly affect people's work efficiency and operational experience.

Firstly, manually confirming/pairing display devices is a time-consuming and error-prone process. During the pairing operation process between a display device and a server, the steps of manually selecting the server to be paired and confirming various identification codes/serial numbers of the server and display device are not only time-consuming but may also lead to incorrect pairing due to input operation errors. Secondly, the process of switching back and forth between cloud servers and display devices also consumes a lot of time. This constant switching operation is not only cumbersome but also reduces work efficiency.

The "Background" section is only to help understand the content of the disclosure, so the content disclosed in the "Background Art" section may include some known technologies that are not known to those skilled in the art. The content disclosed in the "Background Art" section does not represent that the content or one or more embodiments of the disclosure to be solved were known or recognized by those skilled in the art before the application of the disclosure.

WO 2022/211983 A1 provides methods and apparatuses for multi-screen management. In some implementations, a plurality of connection requests may be received from a plurality of screen devices respectively. A screen host unit corresponding to each screen device may be created. A connection of each screen host unit to a corresponding screen device may be established. Screen display data may be transmitted, by at least one screen host unit, to at least one corresponding screen device through at least one corresponding connection respectively. Moreover, in some implementations, a connection request may be transmitted to a screen management hub. A connection to a corresponding screen host unit created by the screen management hub may be established. Screen display data may be received from the screen host unit through the connection. The screen display data may be displayed.

CN 109 302 440 A presents a method for connecting an Internet-of-Things device to a cloud service, wherein establishment of contact to a cloud service occurs via a contact device that includes an apparatus for detecting image and/or acoustic information which is orientated such that an apparatus for emitting optical and/or acoustic signals of the Internet-of-Things device is detectable optically and/or acoustically, transfer of device information of the Internet-of-Things device to an onboarding service of the cloud service is achieved via the apparatus for emitting the optical and/or acoustic signals and via the contact device, transfer of network configuration data to the onboarding service of the cloud service is performed via the contact device, a pairing connectivity file is created by the onboarding service, transfer of the pairing connectivity file to the Internet-of-Things device occurs via the contact device, and creation of the connection occurs from the Internet-of-Things device to the cloud service.

US 10 032 431 B2 presents mobile computing device technology and systems and methods using the same. In particular, mobile computing devices that may serve as a processing component of a disaggregated computing system described, non-integral screens that may be paired with the mobile computing devices, and systems and methods using such devices and screens are described. The mobile computing device technology includes a mobile computing device that lacks an integral screen, but which is capable of throwing at least video information to a non-integral target screen, e.g., via a paired connection established over a wired or wireless communication interface.

### SUMMARY

Other objects and advantages of the disclosure can be further understood from the technical features disclosed in the invention.

The object is solved by the invention defined by the features of the independent claims. Preferred embodiments are given in the dependent claims.

To achieve all or part of the above-mentioned objectives or other objectives, one embodiment of the disclosure provides a display device pairing method, adapted for a display device management system, wherein the display device management system includes a display device and a server. The display device pairing method includes: by the display device, executing a pairing activation command; by the display device, in response to pairing request information being transmitted, waiting to receive pairing information; by the display device, receiving the pairing information provided by the server; by the display device, in response to determining that the pairing information is correct, generating first information, and transmitting the first information to the server providing the pairing information; by the server, in response to determining that the first information is valid, generating second information, and transmitting the second information to the display device; and by the display device, according to the second information, establishing a dedicated communication channel between the display device and the server, so as to allow data or commands to be transmitted via the dedicated communication channel, thereby completing the operation of pairing the display device with the server.

One embodiment of the disclosure provides a display device management system, comprising: a display device, communicatively connected to a network, the display device comprising; a communication circuit, communicatively connected to the network; a storage device, for storing a serial number of the display device and a pairing module; a processing apparatus, electrically connected to the communication circuit and the storage device; and at least one of an input/output device and a lighting device, electrically connected to the processing apparatus, wherein when the processing apparatus receives a pairing activation command, the communication circuit is configured to send first information and receive second information, at least one of the input/output device and the lighting device is configured to display an indication of completed pairing.

In one embodiment of the disclosure, it further includes a server, communicatively connected to the display device via a network connection. The display device is configured to execute the pairing activation command, the display device waits to receive pairing information in response to pairing request information being transmitted, wherein the display device is configured to receive the pairing information provided by the server, wherein the display device, in response to determining that the pairing information is correct, is configured to generate the first information and transmit the first information to the server corresponding to the pairing information, wherein the server, in response to determining that the first information is valid, is configured to generate the second information and transmit the second information to the display device, wherein the display device, according to the second information, establishes a dedicated communication channel between the display device and the server, so as to allow data or commands to be transmitted via the dedicated communication channel, thereby completing the operation of pairing the display device to the server.

In summary, the display device pairing method and display device management system provided by the embodiments of the disclosure have at least one of the following advantages: (1) In the process of pairing the display device, a large amount of manual operation is omitted, and the user only needs to log in to the server and select the display device to be paired. (2) A smart electronic device can be used to pair the display device and the server. (3) The pairing information can be exported to a storage device, and the storage device can be configured to execute the pairing of the display device. (4) The pairing button on the display device or manual activation module can be configured to read the pairing information of the storage device to pair the display device with the server. (5) A secure dedicated communication channel can be established between the paired display device and the server, and the dedicated communication channel has bidirectional data transmission capability.

To make the aforementioned more comprehensible, several embodiments accompanied with drawings are described in detail as follows.

In one or more embodiments, the display device pairing method may further comprise by the display device, providing management account information to the server by executing an activation interface; by the server, in response to determining that the management account information passes authentication, sending a login success notification to the display device, so as to cause the display device to execute the pairing activation command; and by the display device, in response to executing the pairing activation command, executing a pairing interface, and displaying the pairing prompt via the pairing interface.

In one or more embodiments, the display device management system may further comprise a smart electronic device.

In one or more embodiments, the method may further comprise by the smart electronic device, providing management account information to the server through an activation interface; by the server, in response to determining that the management account information passes authentication, sending a login success notification to the smart electronic device; by the smart electronic device, in response to receiving the login success notification, selecting the display device through the activation interface and providing the pairing request information to the server; by the server, generating the pairing information according to the received pairing request information, and transmitting the pairing information to the smart electronic device; and by the smart electronic device, establishing a communication connection to the display device, so as to transmit the pairing information to the display device via the communication connection.

In one or more embodiments, the display device management system may further comprise a smart electronic device and a storage device for electrically connecting the smart electronic device.

In one or more embodiments, the method may further comprise by the smart electronic device, providing management account information to the server through an activation interface; by the server, in response to determining that the management account information passes authentication, sending a login success notification to the activation interface of the smart electronic device; by the smart electronic device, in response to receiving the login success notification, providing the pairing request information to the server through the activation interface; by the server, generating the pairing information according to the received pairing request information, and transmitting the pairing information to the smart electronic device; by the smart electronic device, in response to receiving the pairing information, generating the pairing activation command through the activation interface; and by the smart electronic device, storing the pairing activation command and the pairing information in the storage device.

In one or more embodiments, the method may further comprise by the storage device electrically connected to the display device, executing the pairing activation command on the display device; by the display device, in response to executing the pairing activation command, executing a pairing interface, and displaying the pairing prompt via the pairing interface; and by the display device, in response to the pairing prompt being confirmed, reading the pairing information from the storage device.

In one or more embodiments, the display device may further comprise a pairing button.

In one or more embodiments, the method may further comprise by the display device, in response to the pairing button being triggered, executing the pairing activation command to execute a pairing interface, and reading the storage device electrically connected via the connection interface of the display device, so as to obtain the pairing information.

In one or more embodiments, the first information may comprise the pairing information and a serial number of the display device.

In one or more embodiments, the second information may comprise a connection string.

In one or more embodiments, a terminal electronic device may be communicatively connected to the server.

In one or more embodiments, terminal electronic device may log into the server via the management account information.

In one or more embodiments, the method may further comprise the terminal electronic device transmitting a control command to the server, so as to cause the server to transmit the control command to the display device via the dedicated communication channel, thereby controlling the display device; and the terminal electronic device transmitting display data to the server, so as to cause the server to transmit the display data to the display device via the dedicated communication channel, thereby causing the display device to display an image according to the received display data.

In one or more embodiments, the pairing information may comprise management account information and a pairing server identifier.

In one or more embodiments, the method may further comprise after receiving the pairing information, by the display device, determining whether the pairing information meets the following conditions: whether the format of the pairing information is a predetermined format; and whether the pairing server identifier matches the server.

In one or more embodiments, the first information may comprise the pairing information and a serial number of the display device.

In one or more embodiments, the method may further comprise after receiving the first information, by the server, determining whether the first information meets: whether the time of receiving the first information exceeds the pairing time limit in the pairing information.

In one or more embodiments, the display device management system may further comprise a server, communicatively connected to the display device via a network connection, wherein the display device is configured to execute the pairing activation command, the display device waits to receive pairing information in response to pairing request information being transmitted.

In one or more embodiments, the display device may be configured to receive the pairing information provided by the server.

In one or more embodiments, the display device, in response to determining that the pairing information is correct, may be configured to generate the first information and may transmit the first information to the server corresponding to the pairing information.

In one or more embodiments, the server, in response to determining that the first information is valid, may be configured to generate the second information and transmit the second information to the display device.

In one or more embodiments, the display device, according to the second information, may establish a dedicated communication channel between the display device and the server, so as to allow data or commands to be transmitted via the dedicated communication channel, thereby completing the operation of pairing the display device to the server.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
Fig. 1A is a block diagram of a display device pairing system according to an embodiment of the disclosure.
Fig. 1B is a block diagram of a display device pairing system of another embodiment of the disclosure.
Fig. 1C is a block diagram of a display device pairing system of yet another embodiment of the disclosure.
Fig. 2A is a block diagram of a display device according to an embodiment of the disclosure.
Fig. 2B is a schematic diagram of partial data stored in a storage device according to an embodiment of the disclosure.
Fig. 3 is a flow chart of a display device pairing method according to an embodiment of the disclosure.
Fig. 4 is a flow diagram of a first mode of the display device pairing method according to an embodiment of the disclosure.
Fig. 5 is a flow diagram of a second mode of the display device pairing method according to an embodiment of the disclosure.
Fig. 6A is a flow diagram of a third mode of the display device pairing method according to an embodiment of the disclosure.
Fig. 6B is a flow diagram of a fourth mode of the display device pairing method according to an embodiment of the disclosure.
Fig. 7 is a schematic diagram of using a paired display device and server according to an embodiment of the disclosure.
Fig. 8 is an operational schematic diagram of a first mode of the display device management system according to an embodiment of the disclosure.
Fig. 9 is an operational schematic diagram of a second mode of the display device management system according to an embodiment of the disclosure.
Fig. 10 is an operational schematic diagram of a third mode of the display device management system according to an embodiment of the disclosure.

### DESCRIPTION OF THE EMBODIMENTS

The aforementioned and other technical contents, features and effects of the disclosure will be clearly presented in the following detailed description of a preferred embodiment with reference to the accompanying drawings.

The directional terms mentioned in the following embodiments, such as: up, down, left, right, front or back, etc., are only referenced to the direction of the accompanying drawings. Therefore, the directional terms used are for explanation and not for limiting the disclosure.

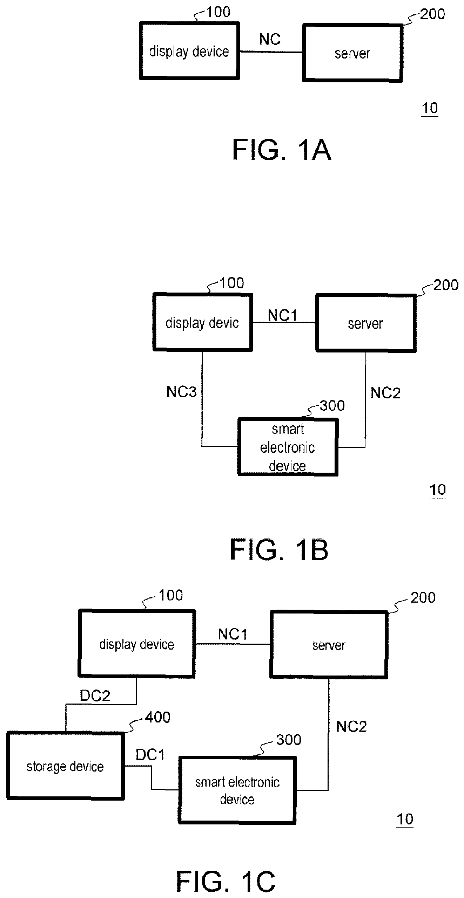

Please refer to Fig. 1A. In this embodiment, the display device management system 10 includes a display device 100 and a server 200. The display device 100 is communicatively connected to a network. That is, the display device 100 is communicatively connected to the server 200 via a network connection NC. The network, for example, is a local area network or the Internet. Here, the display device 100 is, for example, a projector, smart TV, tablet computer, smart whiteboard/blackboard, interactive flat panel display (IFP Display), etc.

In addition, please refer to Fig. 1B. In another embodiment, the display device management system 10 further includes a smart electronic device 300. The display device 100 is communicatively connected to the server 200 via the network connection NC1. The smart electronic device 300 is communicatively connected to the server 200 via the network connection NC2. The smart electronic device 300 is communicatively connected to the display device 100 via the network connection NC3. The network connections NC2 and NC3 are, for example, Internet connections, Bluetooth connections or WiFi connections. The smart electronic device 300 is, for example, a smartphone, personal computer, laptop computer, tablet computer, smart headset device, voice assistant device, etc.

Furthermore, please refer to Fig. 1C. In yet another embodiment, the display device management system 10 further includes a storage device 400. The display device 100 is communicatively connected to the server 200 via the network connection NC1. The smart electronic device 300 is communicatively connected to the server 200 via the network connection NC2. The smart electronic device 300 is communicatively connected to the storage device 400 via the data connection DC1 (for example, the storage device 400 is a USB device and establishes a data connection DC1 with the USB connection interface of the smart electronic device 300, so that the storage device 400 is communicatively connected to the smart electronic device 300), or the storage device 400 is, for example, a near-field communication card (NFC Card), and the smart electronic device 300 establishes a data connection DC1 through wireless transmission technology, so that the storage device 400 is communicatively connected to the smart electronic device 300. In addition, the storage device 400 is communicatively connected to the display device via the data connection DC2 (for example, the storage device 400 is a USB device, inserted into the USB slot of the display device 100 to establish the data connection DC2). The storage device 400 is, for example, a USB device, NFC Card, external hard drive, etc.

The connection methods between devices mentioned in this specification, such as data connection, electrical connection, and communication connection, belong to the method of electrical signal transmission, and are not limited to direct connection or indirect connection modes.

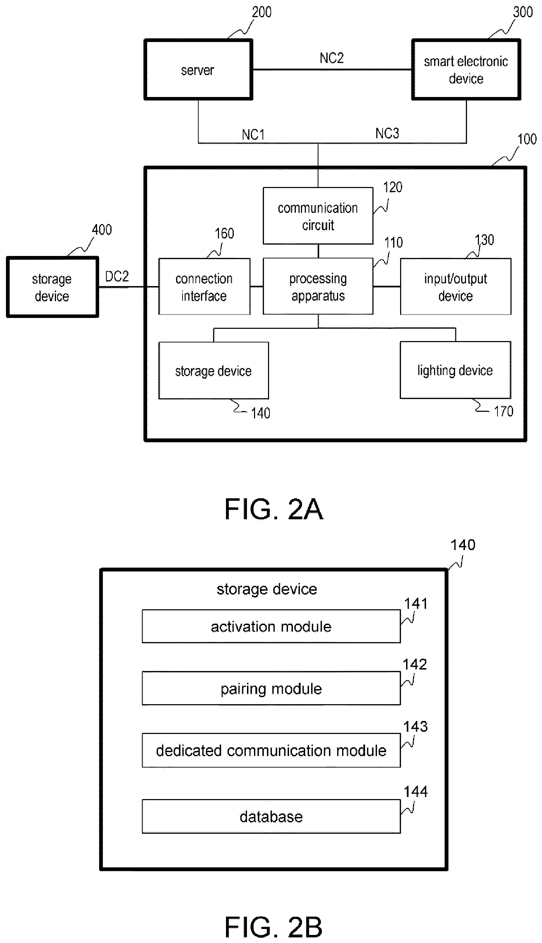

Please refer to Fig. 2A. The display device 100 includes: a processing apparatus 110, a communication circuit 120, an input/output device 130, a storage device 140, a connection interface 160, and a lighting device 170. The processing apparatus 110 is electrically connected to the communication circuit 120, the input/output device 130, the storage device 140, the connection interface 160, and the lighting device 170 respectively, and is configured to control/manage the overall operation of the display device 100.

The processing apparatus 110 includes, for example, one or more processors. The processor can be a microprogrammed control unit, central processing unit (CPU), programmable microprocessor, application-specific integrated circuit (ASIC), programmable logic device (PLD) or other similar devices. The server 200, smart electronic device 300, and terminal electronic device 500 also have similar processing apparatuses, which are configured to manage and execute the overall operations of the server 200, smart electronic device 300, and terminal electronic device 500 respectively.

The communication circuit 120 is configured to establish network connections/communication connections, and transmit or receive data through wireless or wired communication methods. In this embodiment, the communication circuit can have at least one of wireless communication circuits and wired communication circuits, and supports at least one or a combination of Global System for Mobile Communication (GSM) system, Wireless Fidelity (WiFi) system, and Bluetooth communication technology, but is not limited to these. The server 200 and smart electronic device 300 also have similar communication circuits for establishing network connections/communication connections.

In this embodiment, the display device 100 includes one or more input/output devices 130. The input/output device 130 includes input devices and output devices. The input devices are, for example, microphones, touchpads, touch panels, physical knobs, physical buttons, and other devices configured to allow users to input data or control desired functions. The output devices are, for example, projection units, displays (configured to display images according to received image data), speakers (which can be configured to receive audio data to produce sound effects) and other devices. The projection unit is, for example, an optical apparatus, which includes at least one light source, multiple optical components (such as lenses or mirrors), light valves (such as DMD or LCD panel), and projection lenses. The display is, for example, an LCD panel or LED panel or AMOLED panel, etc., configured to display various information and control interfaces of the display device, such as displaying the activation interface and displaying the pairing progress and status. This case is not limited to this. In one embodiment, the input/output device 130 may include a touch screen. The touch screen is configured to display various information and control interfaces of the interactive flat panel display, such as displaying the activation interface and displaying the pairing progress and status. Further explanation, when the display device 100 completes pairing with the server 200, the output device of the input/output device 130 displays an indication of completed pairing, for example, displaying or projecting a completed pairing screen to let the user know.

In this embodiment, the display device 100 includes a storage device 140. The storage device 140 can store/read at least one program, data under the instruction to control of the processing apparatus 110. The storage device 140 is configured to store programs, instructions or data executed by the processor 110. The database 144 of the storage device 140 is configured to store various categories of data. The storage device 140 is, for example, any type of hard disk drive (HDD), non-volatile memory storage device (such as SSD or flash memory), dynamic random access memory (DRAM), static random access memory (SRAM), etc. The smart electronic device 300 and terminal electronic device 500 also have similar storage devices 140, which are configured to manage and execute the overall operations of the smart electronic device 300 and terminal electronic device 500 respectively.

Please refer to Fig. 2B. In this embodiment, the storage device 140 can store an activation module 141, a pairing module 142, a dedicated communication module 143, and a database 144. The activation module 141, pairing module 142, and dedicated communication module 143 are, for example, one or more programs. The activation module 141 is configured to communicate with users and servers, can receive input operations from users and send corresponding login information (such as user's management account information including account and password), and can receive login responses from servers. The operating interface of the activation module 141 (also called the activation interface) can be displayed through the input/output device 130. The activation interface is, for example, a page or window for inputting user account and password. The pairing module 142 is used for operations during the pairing process such as verifying pairing information, generating first information, and receiving second information, and can display pairing confirmation prompt (for example, a pairing prompt window) through the input/output device 130. The dedicated communication module 143 is used for operations to establish a dedicated communication channel after pairing is completed, where various setting operations and control operations of the dedicated communication channel are also handled by the dedicated communication module 143. The database 144 is configured to store lists or pairing settings of various pairing information, for example, lists of multiple servers that can be paired and addresses, names, and user accounts and passwords of multiple servers that can be paired, serial numbers and unique identifiers (UID) of the display device 100, etc. In one embodiment, the activation module 141, pairing module 142, and dedicated communication module 143 can also be implemented in the form of hardware as one or more chips or one or more circuits with corresponding functions.

In addition, the server 200 also has a database, which is configured to store data, for example, storing management account information, pairing information, and display device information (such as unique identifier (UID) or display device name), etc. The database is, for example, any type of hard disk drive (HDD), non-volatile memory storage device (such as SSD or flash memory), dynamic random access memory (DRAM), static random access memory (SRAM), etc.

The connection interface 160 is configured to connect external electronic devices, such as the storage device 400, to access data in the storage device 400. The connection interface 160 is, for example, a USB connection interface, wired or wireless sensing interface, etc., but is not limited to these. The connection interface 160 can also be a connection terminal for electrical connection between circuits within the display device. The lighting device 170 is, for example, at least one LED light source. The lighting device 170 is configured to display different light colors according to instructions/control signals provided by the processing apparatus 110. The different light colors can reflect the current pairing progress of the display device 100. For example, a flashing green light is used to indicate the waiting for pairing stage; a flashing red light is used to indicate abnormalities before pairing (such as network abnormalities or activation failures or other abnormal states that occur before pairing is completed); a non-flashing red light is used to indicate pairing abnormalities (such as incorrect or invalid pairing information); a non-flashing green light is used to display an indication of completed pairing.

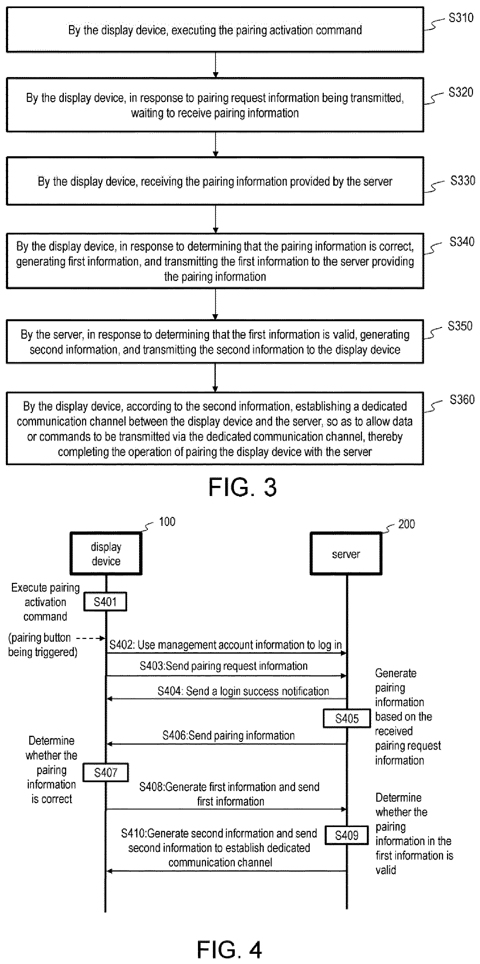

Please refer to Fig. 3. In step S310, by the display device 100, execute the pairing activation command. Specifically, when the processing apparatus 110 executes the pairing activation command to execute the pairing module 142, the pairing process begins. In other embodiments, step S310 may also include a step of displaying a pairing confirmation prompt, that is, at the beginning of the pairing process, a pairing prompt window will be displayed to ask the user whether to execute the pairing of the display device 100 and the server 200. After the pairing prompt is confirmed by the user, the processing apparatus 110 then processes subsequent operations.

Furthermore, in one embodiment, when the processing apparatus 110 executes the pairing activation command, the processing apparatus 110 can execute the activation module 141 to display the activation interface. More specifically, in one embodiment, by executing the activation interface (i.e., executing the activation module 141 to display the activation interface) to provide management account information to the server 200 (the user can input management account information through the operation of the input device, the management account information is, for example, account and password), which represents sending pairing request information to the server 200, the pairing request information is, for example, management account information; by the server 200, determining whether the management account information passes authentication, if it passes authentication, the server 200 sends a login success notification to the activation module 141 of the display device 100.

In one embodiment, by the display device 100, in response to executing the pairing activation command, executing a pairing interface (for example, executing the pairing module 142 to display a pairing prompt window), and displaying the pairing prompt via the pairing interface; by the display device 100, in response to the pairing prompt being confirmed, then sending pairing request information to the server 200. For example, when the "Do you want to execute pairing? (Yes/No)" asked by the pairing confirmation prompt window is clicked "Yes" by the user, in response to this input operation, the processing apparatus 110 determines that the pairing confirmation prompt is confirmed, and generates and sends pairing request information to the server 200. The pairing interface can also be configured to display the current pairing progress, information about the display device to be paired, information about the server to be paired, the management account corresponding to the pairing, and other information related to the pairing operation. The pairing interface can be in the form of windows, buttons, etc.

In addition, by the server 200, generating the pairing information according to the received pairing request information, and transmitting the pairing information to the display device 100. The pairing request information is, for example, the user providing management account information to obtain the right to pair, and the pairing information is, for example, management account information, or management account information and information about the name or location of the server 200, etc.

Then, in step S320, by the display device 100, in response to the pairing request information being transmitted, waiting to receive pairing information. The server 200 generates corresponding pairing information for the display device 100 based on the pairing request information.

Then, in step S330, by the display device 100, receiving the pairing information provided by the server 200. After receiving the pairing information, the processing apparatus 110 will determine whether the pairing information is correct.

Then, in step S340, by the display device 100, in response to determining that the pairing information is correct, generating first information, and transmitting the first information to the server 200 providing the pairing information. The server 200 can verify again whether it is the pairing information provided by the server 200 itself. The first information includes, for example, the management account information provided by the server 200 and the serial number of the display device 100 itself.

Since there may be multiple display devices sending out pairing request information at the same time, the server 200 must receive the first information, and further generate second information according to the first information for establishing a dedicated communication channel.

Then, in step S350, by the server 200, in response to determining that the first information is valid, generating second information, and transmitting the second information to the display device 100. The second information includes, for example, a connection string, which is electronic information configured to allow the display device 100 to communicatively connect to the server 200 and establish a dedicated channel. The second information is configured to correspond (verify) with the data stored in the database of the server 200 to perform bidirectional data transmission. The data stored in the database of the server 200 includes, for example, management account information and a unique identifier (UID), where the unique identifier (UID) is a representative name assigned by the server 200 to the paired display device 100.

Then, in step S360, by the display device 100, according to the second information, establishing a dedicated communication channel between the display device 100 and the server 200, so as to allow data or commands to be transmitted via the dedicated communication channel, thereby completing the operation of pairing the display device to the server. The dedicated communication channel is, for example, an IoT connection or other type of P2P connection. Further explanation, when a user uses the display device 100 or smart electronic device 300, with the permission of the management account information, to read the corresponding information in the database of the server 200, and through the dedicated communication channel, the server 200 sends the corresponding information to the display device 100, where the data includes information such as images or control signals (firmware updates). In addition, the dedicated communication channel has bidirectional transmission capability, and the display device 100 can send back the usage status of related internal components to the server 200.

The following will use Figs. 4-6 to explain different implementation modes of the display device pairing method provided by the embodiments of the disclosure.

The following will use Fig. 4 to comprehensively explain the first mode of the display device pairing method provided by the disclosure when the display device management system 10 includes the display device 100 and the server 200.

Please refer to Fig. 4. In this embodiment, the display device management system 10 includes a display device 100 and a server 200. The processing apparatus 110 of the display device 100 executes the activation interface (activation module 141) to execute the pairing activation command (S401). In other embodiments, wherein the display device 100 further includes a pairing button, in response to the pairing button being triggered, the processing apparatus 110 executes the pairing activation command. The management account information is logged in to the server 200 (S402). It should be noted that the server 200 can be one of the servers pre-set in the display device 100's server list, or the activation module 141 selects a local server based on the geographical location of the display device 100. Through the input operation executed by the user indicating confirmation to proceed with pairing, the pairing request information (login of management account information) is sent to the server 200 (S403). After the server 200 passes the authentication of the management account information, it sends a login success notification to the display device 100 (S404).

After receiving the login success notification, the processing apparatus 110 waits for the server 200 to return the pairing information.

After receiving the pairing request information, the server 200 generates pairing information based on the received pairing request information (S405). The pairing information includes: management account information, pairing server identifier (e.g., server name or location) and pairing time limit. The pairing time limit refers to the pairing that must be completed within a time interval. If it exceeds that time interval (e.g., 1 hour), the pairing information is not accepted by the server 200, so the pairing between the display device 100 and the server 200 cannot be completed.

The server sends the pairing information to the display device 100 (S406). After receiving the pairing information, the processing apparatus 110 determines whether the pairing information is correct (S407). More specifically, the processing apparatus 110 determines whether the pairing information meets the following conditions: whether the format of the pairing information is a predetermined format (such as length, field type); and whether the pairing server identifier matches the server list in the storage device 140 of the display device 100.

If one of the above conditions is not met, the processing apparatus 110 terminates the pairing process. On the contrary, if all the above conditions are met, the processing apparatus 110 determines that the pairing information is correct. Then, the processing apparatus 110 generates first information and sends the first information to the server 200 (S408). The first information includes: the pairing information and the serial number of the display device 100.

After receiving the first information, the server 200 determines whether the pairing information in the first information is valid (S409). More specifically, after receiving the first information, the server 200 determines whether the first information meets all of the following conditions: (1) whether the serial number of the display device belongs to multiple pairable serial numbers (for example, the multiple pairable serial numbers can be confirmed from the list of authorized display devices with corresponding management account information in the server 200); (2) whether the time of receiving the first information exceeds the pairing time limit in the pairing information; and (3) whether the management account information is legal (for example, whether the management account information has legally logged in to the server 200 and applied to pair the display device 100 to the server 200).

In response to determining that one of the above conditions is not met, the server 200 issues a pairing error notification to the display device 100 to terminate the pairing process. On the contrary, in response to determining that all the above conditions are met, the server 200 determines that the pairing information is valid, and the server 200 generates second information and sends second information to the display device 100 to establish a dedicated communication channel (S410). The second information includes: a connection string.

Additionally, in one embodiment, the pairing information provided by the server 200 at the beginning can carry signature information, used to tell the receiving display device 100 that this pairing information is issued by the server, for example. Therefore, the receiving display device 100 can decide whether to accept based on this content. Then, when the display device 100 uploads the first information, for the server, it only knows that it has received first information sent from a display device 100 for pairing, so it must check again whether the content of the pairing information in the first information is correct and whether it is the pairing information sent by that server 200. If it is correct, the server 200 will create a unique identifier and establish a communication connection between the display device 100 and the server 200 through the second information containing that unique identifier for communication and data transmission. That is to say, after the pairing is completed and the dedicated communication channel is established, the user can log in to the server 200 using the management account on the display device 100 and any smart electronic device 300, completing the pairing of the display device 100 and the server 200. Through the pairing of the display device 100 and the server 200, a dedicated communication channel between the display device 100 and the server 200 is established, allowing the server 200 to remotely control or provide data to the display device 100. The display device 100 can also provide the usage status of internal related components (such as light sources) back to the server 200.

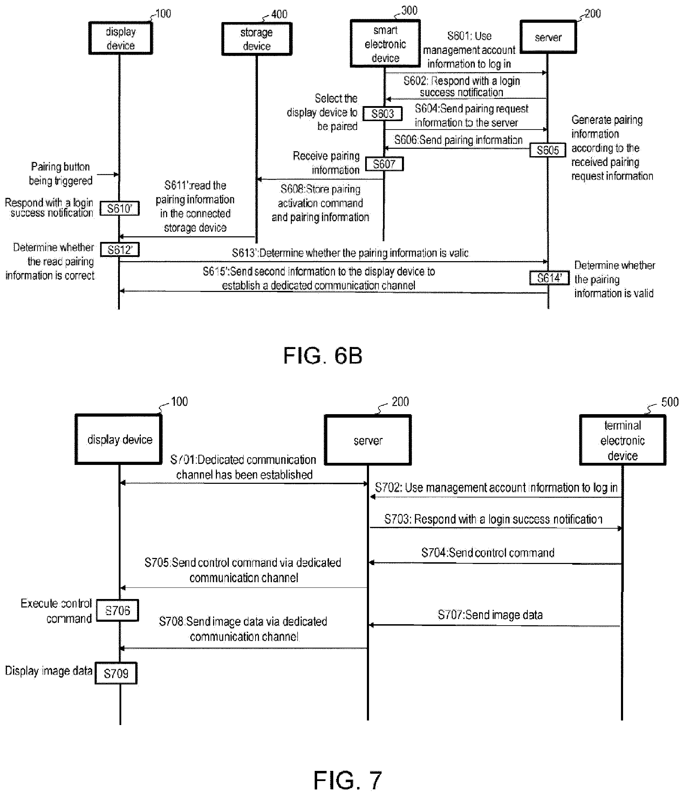

Please first refer to Fig. 7. After the dedicated communication channel is established, data or commands can be transmitted via the more secure dedicated communication channel. In this embodiment, the terminal electronic device 500 is communicatively connected to the server 200 and logs into the server 200 via the management account information. The terminal electronic device 500 can transmit control commands to the server 200, so as to cause the server 200 to transmit the control commands to the display device 100 via the dedicated communication channel, thereby controlling the display device 100. Or, the terminal electronic device 500 transmits display data (such as image data or video data) to the server 200, so as to cause the server 200 to transmit the display data to the display device 100 via the dedicated communication channel, thereby causing the display device 100 to display the screen according to the received display data. The terminal electronic device 500 is, for example, a smartphone, personal computer, laptop computer, tablet computer, smart headset device, voice assistant device, etc. The terminal electronic device 500 can be the smart electronic device 300.

For example, please refer to Fig. 7. The dedicated communication channel has been established (S701). The terminal electronic device 500 is communicatively connected to the server 200 via a network connection and uses the management account information to log in the server 200.The management account information which has completed pairing is bound to the dedicated communication channel (S702). The server 200 verifies the received management account information. After the management account information passes authentication, the server 200 responds with a login success notification (S703). The terminal electronic device 500 can then start sending control commands to control/set the paired display device 100 (S704). The server 200 transmits the control commands via the dedicated communication channel (S705). After receiving the control commands, the display device 100 executes the control commands to perform corresponding settings or operations (S706). In addition, the terminal electronic device 500 can also transmit image data (S707). The server 200 transmits the image data via the dedicated communication channel (S708). After receiving the image data, the display device 100 displays the image data (S709).

It is worth mentioning that in the above embodiment, the activation interface/activation module 141 is executed within the display device 100, but the disclosure is not limited to this. For example, the activation interface/activation module can be set in the smart electronic device 300 and executed by the processing apparatus of the smart electronic device 300 and the processing apparatus of the smart electronic device 300.

In this another embodiment, the display device management system 10 further includes a smart electronic device 300 (as shown in Fig. 1B). The smart electronic device 300 provides management account information to the server 200 through an activation interface. For example, the smart electronic device 300 can install and execute the activation module to provide management account information to the server 200, where the activation module is, for example, a program configured to display the activation interface. Or, the smart electronic device 300 can communicatively connect to an activation webpage with activation module functionality through a browser to provide management account information to the server 200. The activation webpage is, for example, provided by the server 200. For example, the smart electronic device 300 can provide to the server 200 based on the received input operation (such as the account and password entered by the user). The server 200, in response to determining that the management account information passes authentication, sends a login success notification to the smart electronic device 300. Then, the smart electronic device 300, in response to receiving the login success notification, selects the display device 100 through the activation interface and provides the pairing request information to the server.

Then, the server 200 generates the pairing information according to the received pairing request information and transmits the pairing information to the smart electronic device 300.

The smart electronic device 300 establishes a communication connection (such as network connection NC3) to the display device 100. The display device 100 requests the pairing information from the smart electronic device 300. In response to this request, the smart electronic device 300 transmits the pairing information to the display device 100. The subsequent steps after the display device 100 obtains the pairing information are similar to steps S407-S410 in Fig. 4.

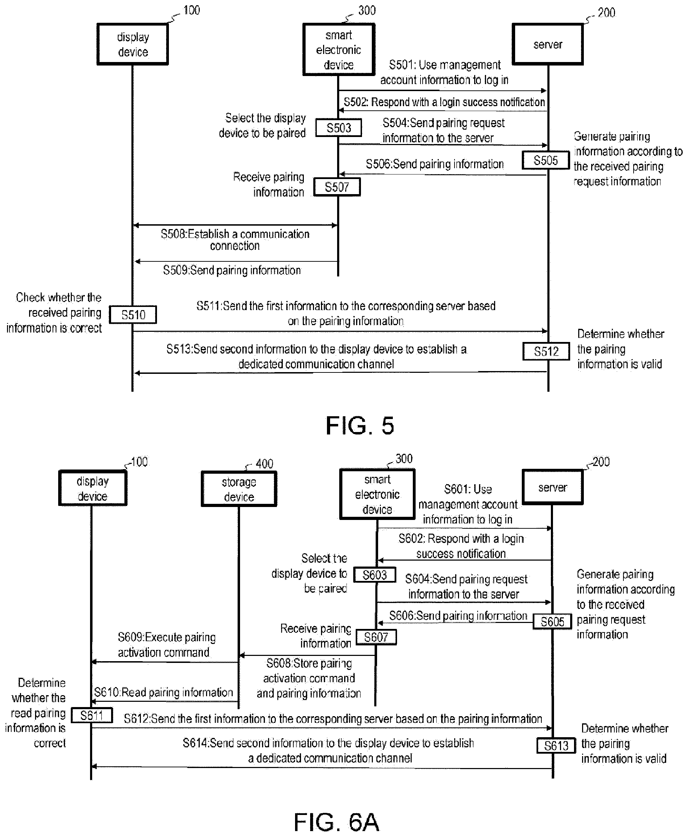

The following will use Fig. 5 to comprehensively explain the second mode of the display device pairing method when the display device management system 10 includes the display device 100, the server 200, and the smart electronic device 300.

For example, please refer to Fig. 5. Through a verified Bluetooth connection or through a network connection, the smart electronic device 300 is communicatively connected to the display device 100. Through the activation interface of the smart electronic device 300, using management account information to log in to the server 200 via the network connection (S501), which means the user does not need to confirm again. Then, in response to the management account information passing authentication, the server 200 responds with a login success notification (S502). After successful login, through the activation interface of the smart electronic device 300, select the display device 100 to be paired (S503), and generate corresponding pairing request information. Then, the smart electronic device 300 sends the pairing request information to the server 200 (S504). In this embodiment, the pairing request information also includes, for example, the serial number of the selected display device. The server 200 generates pairing information based on the received pairing request information (S505) and sends the pairing information to the smart electronic device 300 (S506). The smart electronic device 300 receives the pairing information (S507). At this time, the smart electronic device 300 can store the pairing information in the storage device of the smart electronic device 300. After the smart electronic device 300 establishes a communication connection with the display device 100 (S508), the smart electronic device 300 transmits the pairing information to the display device 100 (S509). It should be noted that in this embodiment, the smart electronic device 300 may have already been authenticated by the display device 100.

Then, the display device 100 checks whether the received pairing information is correct (S510), for example, the display device 100 checks whether the pairing information conforms to the format, and queries the corresponding server address based on the pairing server identifier in the pairing information, etc. In response to determining that the pairing information is correct, the display device 100 transmits the first information to the corresponding server 200 (S511).

Then, the server 200 determines whether the pairing information in the received first information is valid (S512). In response to determining that the pairing information is valid, the server 200 generates second information and transmits second information to the display device 100 to establish a dedicated communication channel (S513).

It is worth mentioning that the smart electronic device 300 can also be the terminal electronic device 500 as shown in Fig. 7. That is to say, after the smart electronic device 300 completes the pairing process with the display device 100 and the server 200, the smart electronic device 300 can start issuing control commands and image data to the server 200 to control the display device 100 or cause the display device 100 to play display screens corresponding to the image data.

The following will use Fig. 6A to comprehensively explain the third mode of the display device pairing method when the display device management system 10 includes the display device 100, the server 200, the smart electronic device 300, and the storage device 400. In this embodiment, the display device pairing method further includes: the smart electronic device 300 can install and execute the activation module to provide management account information to the server 200, where the activation module is, for example, a program configured to display the activation interface. By the smart electronic device 300, providing management account information to the server 200 through an activation interface; by the server 200, in response to determining that the management account information passes authentication, sending a login success notification to the activation interface of the smart electronic device 300; by the smart electronic device 300, in response to receiving the login success notification, providing pairing request information to the server 200 through the activation interface; by the server 200, generating the pairing information according to the received pairing request information, and transmitting the pairing information to the smart electronic device 300; by the smart electronic device 300, in response to receiving the pairing information, generating the pairing activation command through the activation interface; by the smart electronic device 300, storing the pairing activation command and the pairing information in the storage device 400.

In addition, the display device pairing method further includes: by the storage device 400, in response to being electrically connected to the display device 100 via the connection interface 160 of the display device 400, automatically executing the pairing activation command on the display device 100 (or, by the display device 100, in response to being electrically connected to the storage device 400, automatically executing the pairing activation command in the storage device 400); by the display device 100, in response to executing the pairing activation command, executing a pairing interface, and displaying the pairing prompt via the pairing interface; and by the display device 100, in response to the pairing prompt being confirmed, reading the pairing information from the storage device 400.

More specifically, please refer to Fig. 6A. Steps S601-S607 are similar to steps S501-S507 in Fig. 5, and their details are not repeated here.

The smart electronic device 300 stores the pairing activation command and pairing information in the storage device 400 (S608). After the storage is completed, the storage device 400 can be disconnected/detached from the smart electronic device 300.

When the user connects/inserts the storage device 400 to the display device 100, the stored pairing activation command will be executed (S609). The display device 100 reads the pairing information from the storage device 400 (S610), and the display device 100 determines whether the read pairing information is correct (S611). The following steps S612-S614 are similar to steps S511-513, and their details are not repeated here.

In the above embodiment, when the storage device 400 is connected to the display device 100, the pairing activation command is automatically executed, thereby allowing the pairing module to start operating, but it is not limited to this.

In other embodiments, when the storage device 400 is connected to the display device 100, the pairing activation command is activated by the user's operation on the activation interface, thereby allowing the pairing module to start operating.

Please refer to Fig. 6B. In another embodiment (the fourth mode of the display device pairing method), a pairing button can be configured to execute the pairing module 142 and read the pairing information in the storage device 400. Specifically, the processing apparatus 110, in response to the pairing button being triggered, executes the pairing activation command to execute the pairing interface, and reads the storage device 400 electrically connected via the connection interface 160 of the display device 100 to obtain the pairing information.

For example, please refer to Fig. 6B. The difference from Fig. 6A is that in response to the pairing button being triggered, the display device 100 executes the pairing activation command to execute the pairing interface/pairing module (S610'), and reads the pairing information in the connected storage device 400 (S611'). In the above process, there is no need to display a pairing prompt. This is because the display device has already actively sought pairing (the pairing button was triggered). The following steps S612' -S615' are similar to steps S611-S614 in Fig. 6A, and their details are not repeated here.

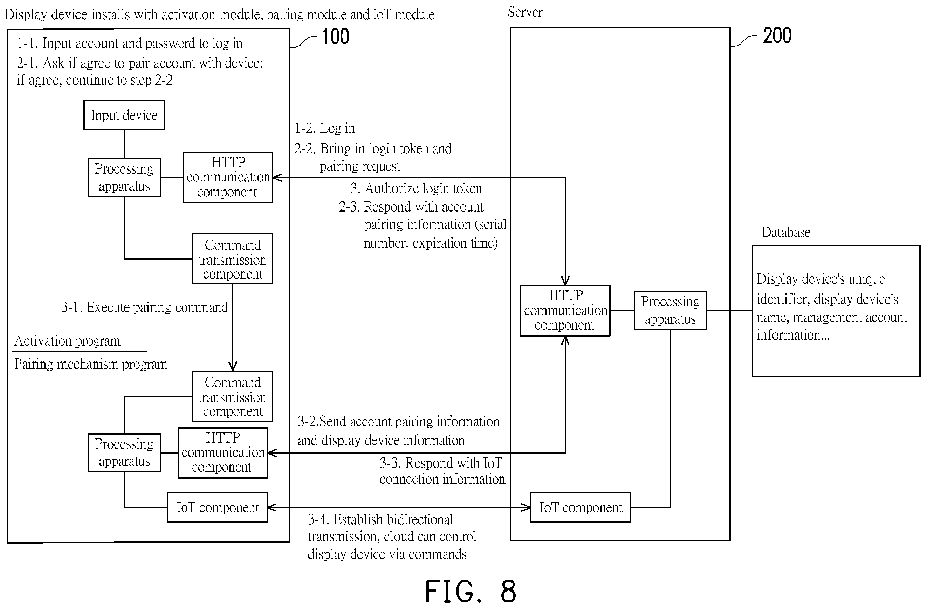

The following will explain the first to fourth modes of the display device pairing method in other embodiments through Figs. 8-10.

Please refer to Fig. 8. Assume the display device management system includes a display device 100 installed with an activation module (activation program), a pairing module (pairing mechanism program) and an Internet of Things module (IoT module, for example, an Internet of Things program, paired with corresponding hardware as IoT components), and a server 200.

Initially, the account and password of the management account data are input to the input device to perform the login procedure (step 1-1); the management account information is sent to the server 200 through the HTTP communication component of the display device 100, and the server 200 responds with login success (step 1-2). The HTTP communication component is a type of wireless or wired communication module, for example, the communication circuit 120.

In one embodiment, the output device of the display device 100 displays a pairing prompt to confirm whether the user of the display device 100 agrees to pair the management account with the display device 100 (step 2-1). If agreed, then execute step 2-2, the server 200 brings in the login token (for example, user account and password) and pairing request information (display device serial number, default expiration time length). The server 200 responds with pairing information (step 2-3), and authorizes the login token (step 3), that is, authorizes the management account to be bound to the display device 100 to pair with the server 200.

Then, the display device 100 executes the pairing activation command to execute the pairing mechanism program (step 3-1). Then, through the HTTP communication component of the display device 100, the first information (pairing information and display device information) is sent out (step S3-2) to the server 200 to receive the second information responded by the server 200 (step S3-3). Finally, bidirectional data transmission is established through the IoT component (step S3-4).

In this embodiment, the underlying layers of both the HTTP communication component and the IoT component use TCP/IP to communicate via the Internet. Therefore, they can also be combined into one component (for example, both integrated into the communication circuit). In addition, the main difference is: HTTP communication component: communicates with the API service of the server 200 through a web browser or application (such as activation module or pairing module); IoT component: IoT device (i.e., display device 100) communicates bidirectionally with cloud services such as Azure IoT, can use different protocols depending on the scenario, such as: HTTP, MQTT (Message Queuing Telemetry Transport), and AMQP (Advanced Message Queuing Protocol), to achieve functions such as the display device 100 actively sending back related information or the server 200 sending commands to control the display device. The command sending component of the display device 100 is, for example, the connection interface 160.

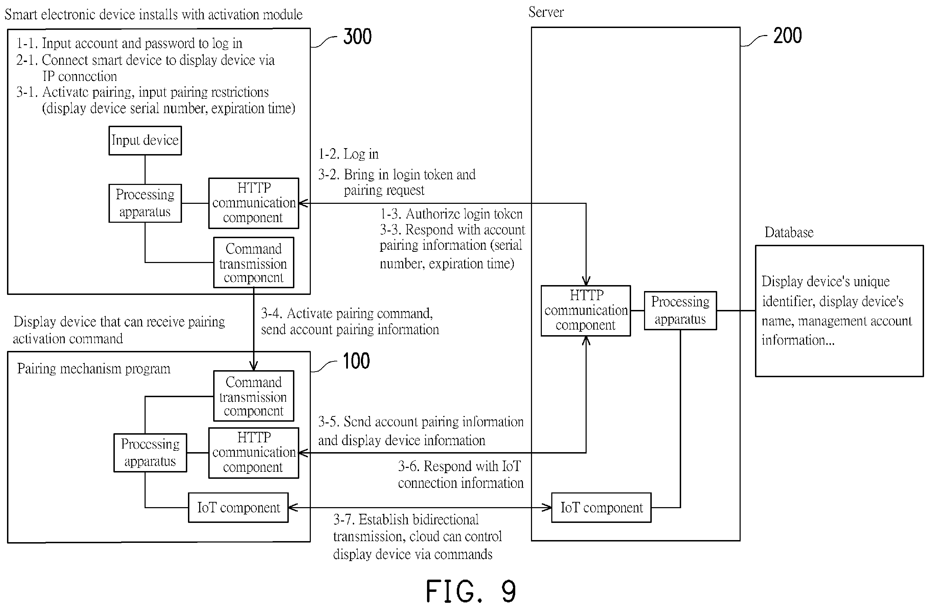

On the other hand, regarding the second mode of the display device pairing method, please refer to Fig. 9. Assume the display device management system includes a smart electronic device 300 installed with an activation module, a display device 100 installed with a pairing module (pairing mechanism program) and an IoT module (also called IoT component), and a server 200.

Initially, the account and password (management account information) of the management account are input to the input device of the smart electronic device 300 to perform the login procedure (step 1-1); the management account information is sent to the server 200 through the HTTP communication component, and the server 200 responds with login success (step 1-2) and authorizes the login token (step 1-3); the display device 100 communicatively connects with the smart electronic device 300 (step 2-1). Generate pairing request information (step 3-1). The server 200 receives the pairing request information (display device serial number, default expiration time length) (step 3-2). The server 200 responds with pairing information (step 3-3).

Then, the display device 100 executes the pairing activation command to execute the pairing mechanism program, and the smart electronic device 300 sends the pairing information (step 3-4). Then, through the HTTP communication component of the display device 100, the first information (pairing information and display device information) is sent out (step S3-5) to receive the second information responded by the server 200 (step S3-6). Finally, bidirectional transmission is established through the IoT component (step S3-7). The command sending component of the display device 100 and the smart electronic device 300 is, for example, the communication circuit 120.

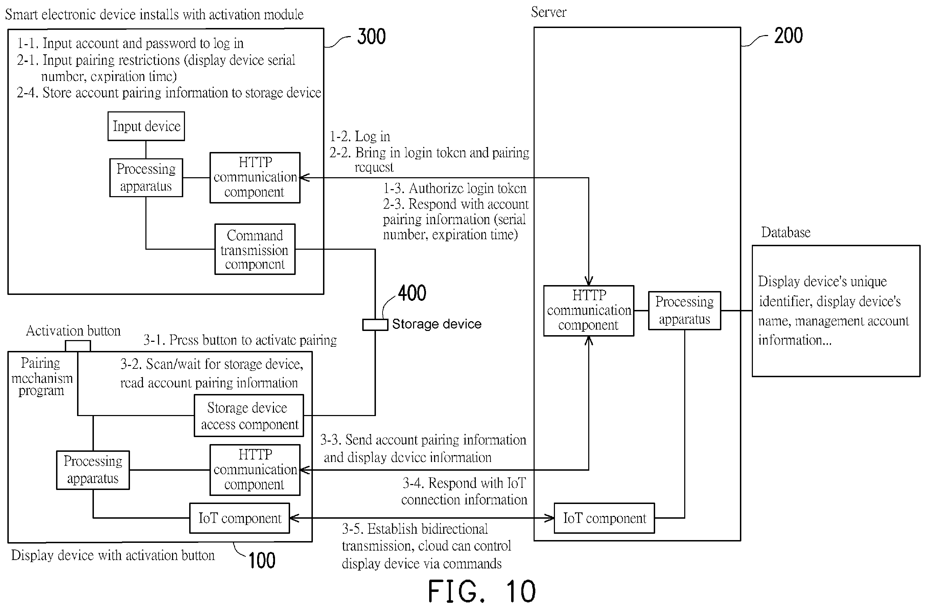

On the other hand, regarding the third mode of the display device pairing method, please refer to Fig. 10. Assume the display device management system includes a smart electronic device 300 installed with an activation module, a display device 100 installed with a pairing module (pairing mechanism program) and an IoT module (also called IoT component), a storage device 400, and a server 200.

Initially, the account and password (management account information) of the management account are input to the input unit of the smart electronic device 300 to perform the login procedure (step 1-1); the management account information is sent to the server 200 through the HTTP communication component, and the server 200 responds with login success (step 1-2) and authorizes the login token (step 1-3); generate pairing request information (step 2-1). The server 200 receives the pairing request information (display device serial number, default expiration time length) (step 2-2). The server 200 responds with pairing information (step 2-3). The smart electronic device 300 stores the pairing information in the storage device 400.

Then, the activation button (pairing button) of the display device 100 is triggered (step 3-1). Then, the display device 100 scans and reads the storage device 400 to obtain the pairing information (step S3-2). Then, the display device 100, through the HTTP communication component, sends out the first information (pairing information and display device information) (step S3-3) to receive the second information responded by the server 200 (step S3-4). Finally, bidirectional transmission is established through the IoT component (step S3-5). The storage device access component of the display device 100 and the smart electronic device 300 is, for example, the connection interface 160.

In summary, in multiple embodiments, after the display device receives the pairing activation command, it begins to execute pairing with the server. The pairing activation command can be executed with the server by pressing a button, operating an activation interface, or logging in with an account and password.

The display device pairing method and display device management system provided in the embodiments have at least one of the following advantages: (1) In the process of pairing the display device, a large amount of manual operation is omitted, and the user only needs to log in to the server and select the display device to be paired. (2) A smart electronic device can be configured to pair the display device and the server. (3) The pairing information can be exported to a storage device, and the storage device can be configured to execute the pairing of the display device. (4) The pairing button on the display device or manual activation module can be configured to read the pairing information of the storage device to pair the display device with the server. (5) A secure dedicated communication channel can be established between the paired display device and the server, and the dedicated communication channel has bidirectional data transmission capability.

However, the above description is only a preferred embodiment of the disclosure and cannot be used to limit the implementation scope of the disclosure.. In addition, any embodiment or patent application range of the disclosure does not need to achieve all the purposes, advantages or features disclosed by the disclosure. Moreover, the abstract and title are only used to assist in searching patent documents and are not used to limit the scope of rights of the disclosure. In addition, the terms "first", "second", etc. mentioned in the specification or patent application range are only used to name the components (elements) and are not used to limit the upper or lower limit of the number of components..

It will be apparent to those skilled in the art that various modifications and variations can be made to the disclosed embodiments without departing from the scope of the disclosure. The scope of invention is defined by the following claims.

## Claims

1. A display device pairing method, adapted for a display device management system (10), wherein the display device management system (10) comprises a display device (100) and a server (200), the method comprising:
by the display device (100), executing (S310) a pairing activation command;
by the display device (100), in response to pairing request information being transmitted, waiting (S320) to receive pairing information;
by the display device (100), receiving (S330) the pairing information provided by the server (200);
by the display device (100), determining whether the pairing information is correct;
by the display device (100), in response to determining that the pairing information is correct, generating (S340) first information, and transmitting the first information to the server (200) or in response to determining that the pairing information is not correct, terminating pairing process of the display device (100) with the server (200);
by the server (200), in response to determining the first information, generating (S350) second information, and transmitting the second information to the display device (100); and
by the display device (100), according to the second information, establishing (S360) a dedicated communication channel between the display device (100) and the server (200), so as to allow data or commands to be transmitted via the dedicated communication channel, thereby completing the operation of pairing the display device (100) with the server (200).

2. The display device pairing method according to claim 1, further comprising:
by the display device (100), providing management account information to the server (200) by executing an activation interface;
by the server (200), in response to determining that the management account information passes authentication, sending (S404) a login success notification to the display device (100), so as to cause the display device (100) to execute the pairing activation command; and
by the display device (100), in response to executing the pairing activation command, executing a pairing interface, and displaying a pairing prompt via the pairing interface.

3. A display device pairing method, adapted for a display device management system (10), wherein the display device management system (10) comprises a display device (100), a server (200) and a smart electronic device (300), wherein the method comprises:
by the smart electronic device (300), providing (S501) management account information to the server through an activation interface;
by the server (200), in response to determining that the management account information passes authentication, sending a login success notification to the smart electronic device (300) (S502);
by the smart electronic device (300), in response to receiving the login success notification, selecting (S503) the display device (100) through the activation interface and providing (S503) the pairing request information to the server (200);
by the server (200), generating (S505) the pairing information according to the received pairing request information, and transmitting (S506) the pairing information to the smart electronic device (300);
by the smart electronic device (300), establishing (S508) a communication connection to the display device (100), so as to transmit (S509) the pairing information to the display device (100) via the communication connection;
by the display device (100), determining (S510) whether the pairing information is correct;
by the display device (100), in response to determining that the pairing information is correct, generating first information, and transmitting (S511) the first information to the server (200) or in response to determining that the pairing information is not correct, terminating pairing process of the display device (100) with the server (200);
by the server (200), in response to determining (S512) the first information, generating second information, and transmitting (S513) the second information to the display device (100); and
by the display device (100), according to the second information, establishing (S360) a dedicated communication channel between the display device (100) and the server (200), so as to allow data or commands to be transmitted via the dedicated communication channel, thereby completing the operation of pairing the display device (100) with the server (200).

4. The display device pairing method according to claim 1, wherein the display device management system (10) further comprises a smart electronic device (300) and a storage device (400) for electrically connecting the smart electronic device (300), wherein the method further comprises:
by the smart electronic device (300), providing management account information to the server (200) through an activation interface;
by the server (200), in response to determining that the management account information passes authentication, sending a login success notification to the activation interface of the smart electronic device (300);
by the smart electronic device (300), in response to receiving the login success notification, providing the pairing request information to the server (200) through the activation interface;
by the server (200), generating the pairing information according to the received pairing request information, and transmitting the pairing information to the smart electronic device (300);
by the smart electronic device (300), in response to receiving the pairing information, generating the pairing activation command through the activation interface; and
by the smart electronic device (300), storing the pairing activation command and the pairing information in the storage device (400).

5. The display device pairing method according to claim 4, wherein the method further comprises:
by the storage device (400) electrically connected to the display device (100), executing the pairing activation command on the display device (100);
by the display device (100), in response to executing the pairing activation command, executing a pairing interface, and displaying the pairing prompt via the pairing interface; and
by the display device (100), in response to the pairing prompt being confirmed, reading the pairing information from the storage device (400).

6. The display device pairing method according to claim 4 or 5, wherein the display device (100) further comprises a pairing button, wherein the method further comprises:
by the display device (100), in response to the pairing button being triggered, executing the pairing activation command to execute a pairing interface, and reading the storage device (400) electrically connected via the connection interface of the display device (100), so as to obtain the pairing information.

7. The display device pairing method according to any one of the preceding claims, wherein the first information comprises the pairing information and a serial number of the display device (100).

8. The display device pairing method according to any one of the preceding claims, wherein the second information comprises a connection string.

9. The display device pairing method according to claim 8, wherein a terminal electronic device (500) is communicatively connected to the server (200), and logs into the server (200) via the management account information, the method further comprising:
the terminal electronic device (500) transmitting a control command to the server (200), so as to cause the server (200) to transmit the control command to the display device (100) via the dedicated communication channel, thereby controlling the display device (100); and
the terminal electronic device (500) transmitting display data to the server (200), so as to cause the server (200) to transmit the display data to the display device (100) via the dedicated communication channel, thereby causing the display device (100) to display an image according to the received display data.

10. The display device pairing method according to any one of the preceding claims, wherein the pairing information comprises management account information and a pairing server identifier.

11. The display device pairing method according to any one of the preceding claims, wherein the method further comprises:
after receiving the pairing information, by the display device (100), determining whether the pairing information meets the following condition:
whether a format of the pairing information is a predetermined format; and
whether the pairing server identifier matches the server list.

12. The display device pairing method according to any one of the preceding claims, wherein the first information comprises the pairing information and a serial number of the display device (100), the method further comprising:
after receiving the first information, by the server (200), determining whether the first information meets:
whether the time of receiving the first information exceeds a pairing time limit in the pairing information.

13. A display device management system (10), comprising:
a display device (100), communicatively connected to a network, the display device (100) comprising:
a communication circuit (120), communicatively connected to the network;
a storage device (140), for storing a serial number of the display device;
a processing apparatus (110), electrically connected to the communication circuit (120) and the storage device (140); and
a lighting device (170), electrically connected to the processing apparatus (110),
wherein the communication circuit (120) is configured to send first information and to receive pairing information and second information,
the lighting device (170) is configured to display an indication of completed pairing, and
wherein the processing apparatus (110) is configured to determine whether the pairing information is correct, and in response to determining that the pairing information is correct, the processing apparatus (110) is configured to generate the first information, and to transmit the first information to the network or in response to determining that the pairing information is not correct, the processing apparatus (110) is configured to terminate a pairing process of the display device (100).

14. The display device management system according to claim 13, further comprising:
a server (200), communicatively connected to the display device (100) via a network connection, wherein the display device (100) is configured to execute a pairing activation command, the display device (100) is configured to wait to receive the pairing information in response to pairing request information being transmitted,
wherein the server (200), in response to determining that the first information is valid, is configured to generate the second information and transmit the second information to the display device (100),
wherein the display device (100), according to the second information, is configured to establish a dedicated communication channel between the display device (100) and the server (200) , so as to allow data or commands to be transmitted via the dedicated communication channel, thereby completing the operation of pairing the display device (100) to the server (200).

## Patentansprüche

1. Verfahren zum Paaren von Anzeigevorrichtungen, das für ein System (10) für das Management von Anzeigevorrichtungen ausgelegt ist, wobei das System (10) für das Management von Anzeigevorrichtungen eine Anzeigevorrichtung (100) und einen Server (200) umfasst, wobei das Verfahren umfasst:
durch die Anzeigevorrichtung (100) Ausführen (S310) eines Paarungsaktivierungsbefehls;
durch die Anzeigevorrichtung (100) in Reaktion darauf, dass Paarungsanfrageinformationen gesendet werden, Warten (S320) auf den Empfang von Paarungsinformationen;
durch die Anzeigevorrichtung (100) Empfangen (S330) der durch den Server (200) bereitgestellten Paarungsinformationen;
durch die Anzeigevorrichtung (100) Bestimmen, ob die Paarungsinformationen korrekt sind;
durch die Anzeigevorrichtung (100) in Reaktion auf das Bestimmen, dass die Paarungsinformationen korrekt sind, Erzeugen (S340) erster Informationen und Senden der ersten Informationen an den Server (200) oder in Reaktion auf das Bestimmen, dass die Paarungsinformationen nicht korrekt sind, Beenden des Paarungsvorgangs der Anzeigevorrichtung (100) mit dem Server (200);
durch den Server (200) in Reaktion auf das Bestimmen der ersten Informationen Erzeugen (S350) zweiter Informationen und Senden der zweiten Informationen an die Anzeigevorrichtung (100); und
durch die Anzeigevorrichtung (100) Einrichten (S360) eines dedizierten Kommunikationskanals zwischen der Anzeigevorrichtung (100) und dem Server (200) gemäß den zweiten Informationen, um zu erlauben, dass Daten oder Befehle über den dedizierten Kommunikationskanal gesendet werden, wodurch der Vorgang des Paarens der Anzeigevorrichtung (100) mit dem Server (200) abgeschlossen wird.

2. Verfahren zum Paaren von Anzeigevorrichtungen nach Anspruch 1, das ferner umfasst:
durch die Anzeigevorrichtung (100) Bereitstellen von Managementkontoinformationen für den Server (200) durch Ausführen einer Aktivierungsschnittstelle;
durch den Server (200) in Reaktion auf das Bestimmen, dass die Managementkontoinformationen eine Authentifizierung bestehen, Senden (S404) einer Login-Erfolgsbenachrichtigung an die Anzeigevorrichtung (100), um die Anzeigevorrichtung (100) zu veranlassen, den Paarungsaktivierungsbefehl auszuführen; und
durch die Anzeigevorrichtung (100) in Reaktion auf das Ausführen des Paarungsaktivierungsbefehls Ausführen einer Paarungsschnittstelle und Anzeigen einer Paarungsaufforderung über die Paarungsschnittstelle.

3. Verfahren zum Paaren von Anzeigevorrichtungen, das für ein System (10) für das Management von Anzeigevorrichtungen ausgelegt ist, wobei das System (10) für das Management von Anzeigevorrichtungen eine Anzeigevorrichtung (100), einen Server (200) und eine intelligente elektronische Vorrichtung (300) umfasst, wobei das Verfahren umfasst:
durch die intelligente elektronische Vorrichtung (300) Bereitstellen (S501) von Managementkontoinformationen für den Server durch eine Aktivierungsschnittstelle;
durch den Server (200) in Reaktion auf das Bestimmen, dass die Managementkontoinformationen eine Authentifizierung bestehen, Senden einer Login-Erfolgsbenachrichtigung an die intelligente elektronische Vorrichtung (300) (S502);
durch die intelligente elektronische Vorrichtung (300) in Reaktion auf das Empfangen der Login-Erfolgsbenachrichtigung Auswählen (S503) der Anzeigevorrichtung (100) durch die Aktivierungsschnittstelle und Bereitstellen (S503) der Paarungsanfrageinformationen für den Server (200);
durch den Server (200) Erzeugen (S505) der Paarungsinformationen gemäß den empfangenen Paarungsanfrageinformationen und Senden (S506) der Paarungsinformationen an die intelligente elektronische Vorrichtung (300);
durch die intelligente elektronische Vorrichtung (300) Einrichten (S508) einer Kommunikationsverbindung mit der Anzeigevorrichtung (100), um die Paarungsinformationen über die Kommunikationsverbindung an die Anzeigevorrichtung (100) zu senden (S509);
durch die Anzeigevorrichtung (100) Bestimmen (S510), ob die Paarungsinformationen korrekt sind;
durch die Anzeigevorrichtung (100) in Reaktion auf das Bestimmen, dass die Paarungsinformationen korrekt sind, Erzeugen erster Informationen und Senden (S511) der ersten Informationen an den Server (200) oder in Reaktion auf das Bestimmen, dass die Paarungsinformationen nicht korrekt sind, Beenden des Paarungsvorgangs der Anzeigevorrichtung (100) mit dem Server (200);
durch den Server (200) in Reaktion auf das Bestimmen (S512) der ersten Informationen Erzeugen zweiter Informationen und Senden (S513) der zweiten Informationen an die Anzeigevorrichtung (100); und
durch die Anzeigevorrichtung (100) gemäß den zweiten Informationen Einrichten (S360) eines dedizierten Kommunikationskanals zwischen der Anzeigevorrichtung (100) und dem Server (200), um zu erlauben, dass Daten oder Befehle über den dedizierten Kommunikationskanal gesendet werden, wodurch der Vorgang des Paarens der Anzeigevorrichtung (100) mit dem Server (200) abgeschlossen wird.

4. Verfahren zum Paaren von Anzeigevorrichtungen nach Anspruch 1, wobei das System (10) für das Management von Anzeigevorrichtungen ferner eine intelligente elektronische Vorrichtung (300) und eine Speichervorrichtung (400) zum elektrischen Verbinden der intelligenten elektronischen Vorrichtung (300) umfasst, wobei das Verfahren ferner umfasst:
durch die intelligente elektronische Vorrichtung (300) Bereitstellen von Managementkontoinformationen für den Server (200) durch eine Aktivierungsschnittstelle;
durch den Server (200) in Reaktion auf das Bestimmen, dass die Managementkontoinformationen eine Authentifizierung bestehen, Senden einer Login-Erfolgsbenachrichtigung an die Aktivierungsschnittstelle der intelligenten elektronischen Vorrichtung (300);
durch die intelligente elektronische Vorrichtung (300) in Reaktion auf das Empfangen der Login-Erfolgsbenachrichtigung Bereitstellen der Paarungsanfrageinformationen für den Server (200) durch die Aktivierungsschnittstelle;
durch den Server (200) Erzeugen der Paarungsinformationen gemäß den empfangenen Paarungsanfrageinformationen und Senden der Paarungsinformationen an die intelligente elektronische Vorrichtung (300);
durch die intelligente elektronische Vorrichtung (300) in Reaktion auf das Empfangen der Paarungsinformationen Erzeugen des Paarungsaktivierungsbefehls durch die Aktivierungsschnittstelle; und
durch die intelligente elektronische Vorrichtung (300) Speichern des Paarungsaktivierungsbefehls und der Paarungsinformationen in der Speichervorrichtung (400).

5. Verfahren zum Paaren von Anzeigevorrichtungen nach Anspruch 4, wobei das Verfahren ferner umfasst:
durch die Speichervorrichtung (400), die mit der Anzeigevorrichtung (100) elektrisch verbunden ist, Ausführen des Paarungsaktivierungsbefehls auf der Anzeigevorrichtung (100);
durch die Anzeigevorrichtung (100) in Reaktion auf das Ausführen des Paarungsaktivierungsbefehls Ausführen einer Paarungsschnittstelle und Anzeigen der Paarungsaufforderung über die Paarungsschnittstelle; und
durch die Anzeigevorrichtung (100) in Reaktion darauf, dass die Paarungsaufforderung bestätigt wird, Lesen der Paarungsinformationen von der Speichervorrichtung (400).

6. Verfahren zum Paaren von Anzeigevorrichtungen nach Anspruch 4 oder 5, wobei die Anzeigevorrichtung (100) ferner eine Paarungstaste umfasst, wobei das Verfahren ferner umfasst:
durch die Anzeigevorrichtung (100) in Reaktion darauf, dass die Paarungstaste ausgelöst wird, Ausführen des Paarungsaktivierungsbefehls, um eine Paarungsschnittstelle auszuführen, und Auslesen der Speichervorrichtung (400), die über die Verbindungsschnittstelle der Anzeigevorrichtung (100) elektrisch verbunden ist, um die Paarungsinformationen zu erhalten.

7. Verfahren zum Paaren von Anzeigevorrichtungen nach einem der vorhergehenden Ansprüche, wobei die ersten Informationen die Paarungsinformationen und eine Seriennummer der Anzeigevorrichtung (100) umfassen.

8. Verfahren zum Paaren von Anzeigevorrichtungen nach einem der vorhergehenden Ansprüche, wobei die zweiten Informationen eine Verbindungszeichenkette umfassen.

9. Verfahren zum Paaren von Anzeigevorrichtungen nach Anspruch 8, wobei eine elektronische Endgerätvorrichtung (500) mit dem Server (200) kommunikationstechnisch verbunden ist und sich über die Managementkontoinformationen in den Server (200) einloggt, wobei das Verfahren ferner umfasst, dass:
die elektronische Endgerätvorrichtung (500) einen Steuerbefehl an den Server (200) sendet, um den Server (200) zu veranlassen, den Steuerbefehl über den dedizierten Kommunikationskanal an die Anzeigevorrichtung (100) zu senden, wodurch die Anzeigevorrichtung (100) gesteuert wird; und
die elektronische Endgerätvorrichtung (500) Anzeigedaten an den Server (200) sendet, um den Server (200) zu veranlassen, die Anzeigedaten über den dedizierten Kommunikationskanal an die Anzeigevorrichtung (100) zu senden, wodurch die Anzeigevorrichtung (100) veranlasst wird, ein Bild gemäß den empfangenen Anzeigedaten anzuzeigen.

10. Verfahren zum Paaren von Anzeigevorrichtungen nach einem der vorhergehenden Ansprüche, wobei die Paarungsinformationen Managementkontoinformationen und eine Paarungs-Server-Kennung umfassen.

11. Verfahren zum Paaren von Anzeigevorrichtungen nach einem der vorhergehenden Ansprüche, wobei das Verfahren ferner umfasst:
nach dem Empfangen der Paarungsinformationen durch die Anzeigevorrichtung (100) Bestimmen, ob die Paarungsinformationen die folgende Bedingung erfüllen:
ob ein Format der Paarungsinformationen ein vorgegebenes Format ist; und
ob die Paarungs-Server-Kennung mit der Server-Liste übereinstimmt.

12. Verfahren zum Paaren von Anzeigevorrichtungen nach einem der vorhergehenden Ansprüche, wobei die ersten Informationen die Paarungsinformationen und eine Seriennummer der Anzeigevorrichtung (100) umfassen, wobei das Verfahren ferner umfasst:
nach dem Empfangen der ersten Informationen durch den Server (200) Bestimmen, ob die ersten Informationen erfüllen:
ob die Zeit zum Empfangen der ersten Informationen eine Paarungszeitgrenze in den Paarungsinformationen übersteigt.

13. System (10) für das Management von Anzeigevorrichtungen, das umfasst:
eine Anzeigevorrichtung (100), die mit einem Netz kommunikationstechnisch verbunden ist, wobei die Anzeigevorrichtung (100) umfasst:
eine Kommunikationsschaltung (120), die mit dem Netz kommunikationstechnisch verbunden ist;
eine Speichervorrichtung (140) zum Speichern einer Seriennummer der Anzeigevorrichtung;
eine Verarbeitungsvorrichtung (110), die mit der Kommunikationsschaltung (120) und der Speichervorrichtung (140) elektrisch verbunden ist; und
eine Beleuchtungsvorrichtung (170), die mit der Verarbeitungsvorrichtung (110) elektrisch verbunden ist,
wobei die Kommunikationsschaltung (120) konfiguriert ist, erste Informationen zu senden und Paarungsinformationen und zweite Informationen zu empfangen,
wobei die Beleuchtungsvorrichtung (170) konfiguriert ist, eine Angabe des abgeschlossenen Paarens anzuzeigen, und
wobei die Verarbeitungsvorrichtung (110) konfiguriert ist, zu bestimmen, ob die Paarungsinformationen korrekt sind, und in Reaktion auf das Bestimmen, dass die Paarungsinformationen korrekt sind, die Verarbeitungsvorrichtung (110) konfiguriert ist, die ersten Informationen zu erzeugen und die ersten Informationen an das Netz zu senden, oder in Reaktion auf das Bestimmen, dass die Paarungsinformationen nicht korrekt sind, die Verarbeitungsvorrichtung (110) konfiguriert ist, einen Paarungsvorgang der Anzeigevorrichtung (100) zu beenden.

14. Verfahren zum Verwalten von Anzeigevorrichtungen nach Anspruch 13, das ferner umfasst:
einen Server (200), der mit der Anzeigevorrichtung (100) über eine Netzverbindung kommunikationstechnisch verbunden ist, wobei die Anzeigevorrichtung (100) konfiguriert ist, einen Paarungsaktivierungsbefehl auszuführen, wobei die Anzeigevorrichtung (100) konfiguriert ist, in Reaktion darauf, dass Paarungsanfrageinformationen gesendet werden, auf den Empfang der Paarungsinformationen zu warten,
wobei der Server (200) in Reaktion auf das Bestimmen, dass die ersten Informationen gültig sind, konfiguriert ist, die zweiten Informationen zu erzeugen und die zweiten Informationen an die Anzeigevorrichtung (100) zu senden,
wobei die Anzeigevorrichtung (100) gemäß den zweiten Informationen konfiguriert ist, einen dedizierten Kommunikationskanal zwischen der Anzeigevorrichtung (100) und dem Server (200) einzurichten, um zu erlauben, dass Daten oder Befehle über den dedizierten Kommunikationskanal gesendet werden, wodurch der Vorgang des Paarens der Anzeigevorrichtung (100) mit dem Server (200) abgeschlossen wird.

## Revendications

1. Procédé d'appariement de dispositif d'affichage, adapté pour un système de gestion de dispositif d'affichage (10), dans lequel le système de gestion de dispositif d'affichage (10) comporte un dispositif d'affichage (100) et un serveur (200), le procédé comportant de :
exécuter (S310), par le dispositif d'affichage (100), une instruction d'activation d'appariement ;
attendre (S320), par le dispositif d'affichage (100), en réponse à la transmission d'informations de demande d'appariement, de recevoir des informations d'appariement ;
recevoir (S330), par le dispositif d'affichage (100), les informations d'appariement fournies par le serveur (200) ;
déterminer, par le dispositif d'affichage (100), si les informations d'appariement sont correctes ;
générer (S340), par le dispositif d'affichage (100), en réponse à la détermination que les informations d'appariement sont correctes, des premières informations et transmettre les premières informations au serveur (200) ou, en réponse à la détermination que les informations d'appariement ne sont pas correctes, mettre fin au processus d'appariement du dispositif d'affichage (100) avec le serveur (200) ;
générer (S350), par le serveur (200), en réponse à la détermination des premières informations, des secondes informations et transmettre les secondes informations au dispositif d'affichage (100) ; et
établir (S360), par le dispositif d'affichage (100), en fonction des secondes informations, un canal de communication dédié entre le dispositif d'affichage (100) et le serveur (200), de manière à permettre la transmission de données ou d'instructions via le canal de communication dédié, en achevant ainsi l'opération d'appariement du dispositif d'affichage (100) avec le serveur (200).

2. Procédé d'appariement de dispositif d'affichage selon la revendication 1, comportant en outre de :
fournir, par le dispositif d'affichage (100), des informations de compte de gestion au serveur (200) en exécutant une interface d'activation ;
envoyer (S404) au dispositif d'affichage (100), par le serveur (200), en réponse à la détermination que les informations de compte de gestion réussissent l'authentification, une notification de réussite d'ouverture de session, de manière à amener le dispositif d'affichage (100) à exécuter l'instruction d'activation d'appariement ; et
exécuter , par le dispositif d'affichage (100), en réponse à l'exécution de l'instruction d'activation d'appariement, une interface d'appariement et afficher une invite d'appariement via l'interface d'appariement.

3. Procédé d'appariement de dispositif d'affichage, adapté pour un système de gestion de dispositif d'affichage (10), dans lequel le système de gestion de dispositif d'affichage (10) comporte un dispositif d'affichage (100), un serveur (200) et un dispositif électronique intelligent (300), dans lequel le procédé comporte de :
fournir (S501) au serveur, par le dispositif électronique intelligent (300), des informations de compte de gestion par l'intermédiaire d'une interface d'activation ;
envoyer (S502) au dispositif électronique intelligent (300), par le serveur (200), en réponse à la détermination que les informations de compte de gestion réussissent l'authentification, une notification de réussite d'ouverture de session ;
sélectionner (S503), par le dispositif électronique intelligent (300), en réponse à la réception de la notification de réussite d'ouverture de session, le dispositif d'affichage (100) par l'intermédiaire de l'interface d'activation et fournir (S503) les informations de demande d'appariement au serveur (200) ;
générer (S505), par le serveur (200), les informations d'appariement en fonction des informations de demande d'appariement reçues, et transmettre (S506) les informations d'appariement au dispositif électronique intelligent (300) ;
établir (S508), par le dispositif électronique intelligent (300), une connexion de communication avec le dispositif d'affichage (100), de manière à transmettre (S509) les informations d'appariement au dispositif d'affichage (100) via la connexion de communication ;
déterminer (S510), par le dispositif d'affichage (100), si les informations d'appariement sont correctes ;
générer, par le dispositif d'affichage (100), en réponse à la détermination que les informations d'appariement sont correctes, des premières informations et transmettre (S511) les premières informations au serveur (200) ou mettre fin, en réponse à la détermination que les informations d'appariement ne sont pas correctes, au processus d'appariement du dispositif d'affichage (100) avec le serveur (200) ;
générer , par le serveur (200), en réponse à la détermination (S512) des premières informations, des secondes informations et transmettre (S513) les secondes informations au dispositif d'affichage (100) ; et
établir (S360), par le dispositif d'affichage (100), en fonction des secondes informations, un canal de communication dédié entre le dispositif d'affichage (100) et le serveur (200), de manière à permettre la transmission de données ou d'instructions via le canal de communication dédié, en achevant ainsi l'opération d'appariement du dispositif d'affichage (100) avec le serveur (200).

4. Procédé d'appariement de dispositif d'affichage selon la revendication 1, dans lequel le système de gestion de dispositif d'affichage (10) comporte en outre un dispositif électronique intelligent (300) et un dispositif de stockage (400) pour connecter électriquement le dispositif électronique intelligent (300), dans lequel le procédé comporte en outre de :
fournir , par le dispositif électronique intelligent (300), des informations de compte de gestion au serveur (200) par l'intermédiaire d'une interface d'activation ;
envoyer , par le serveur (200), en réponse à la détermination que les informations de compte de gestion réussissent l'authentification, une notification de réussite de connexion à l'interface d'activation du dispositif électronique intelligent (300) ;
fournir, par le dispositif électronique intelligent (300), en réponse à la réception de la notification de réussite d'ouverture de session, les informations de demande d'appariement au serveur (200) par l'intermédiaire de l'interface d'activation ;
générer, par le serveur (200), les informations d'appariement en fonction des informations de demande d'appariement reçues, et transmettre les informations d'appariement au dispositif électronique intelligent (300) ;
générer, par le dispositif électronique intelligent (300), en réponse à la réception des informations d'appariement, l'instruction d'activation d'appariement par l'intermédiaire de l'interface d'activation ; et
stocker, par le dispositif électronique intelligent (300), l'instruction d'activation d'appariement et les informations d'appariement dans le dispositif de stockage (400).

5. Procédé d'appariement de dispositif d'affichage selon la revendication 4, dans lequel le procédé comporte en outre de :
exécuter, par le dispositif de stockage (400) électriquement connecté au dispositif d'affichage (100), l'instruction d'activation d'appariement sur le dispositif d'affichage (100) ;
exécuter, par le dispositif d'affichage (100), en réponse à l'exécution de l'instruction d'activation d'appariement, une interface d'appariement et afficher l'invite d'appariement via l'interface d'appariement ; et
lire, par le dispositif d'affichage (100), en réponse à la confirmation de l'invite d'appariement, les informations d'appariement à partir du dispositif de stockage (400).

6. Procédé d'appariement de dispositif d'affichage selon la revendication 4 ou 5, dans lequel le dispositif d'affichage (100) comporte en outre un bouton d'appariement, dans lequel le procédé comporte en outre de :
exécuter, par le dispositif d'affichage (100), en réponse au déclenchement du bouton d'appariement, l'instruction d'activation d'appariement pour exécuter une interface d'appariement, et lire le dispositif de stockage (400) électriquement connecté via l'interface de connexion du dispositif d'affichage (100), de manière à obtenir les informations d'appariement.

7. Procédé d'appariement de dispositif d'affichage selon l'une quelconque des revendications précédentes, dans lequel les premières informations comportent les informations d'appariement et un numéro de série du dispositif d'affichage (100).

8. Procédé d'appariement de dispositif d'affichage selon l'une quelconque des revendications précédentes, dans lequel les secondes informations comportent une chaîne de connexion.

9. Procédé d'appariement de dispositif d'affichage selon la revendication 8, dans lequel un dispositif électronique terminal (500) est connecté au serveur (200) de façon à pouvoir communiquer, et ouvre une session dans le serveur (200) via les informations de compte de gestion, le procédé comportant en outre de :
transmettre, par le dispositif électronique terminal (500), une instruction de commande au serveur (200), de manière à amener le serveur (200) à transmettre l'instruction de commande au dispositif d'affichage (100) via le canal de communication dédié, en commandant ainsi le dispositif d'affichage (100) ; et
transmettre, par le dispositif électronique terminal (500), des données d'affichage au serveur (200), de manière à amener le serveur (200) à transmettre les données d'affichage au dispositif d'affichage (100) via le canal de communication dédié, en amenant ainsi le dispositif d'affichage (100) à afficher une image en fonction des données d'affichage reçues.

10. Procédé d'appariement de dispositif d'affichage selon l'une quelconque des revendications précédentes, dans lequel les informations d'appariement comportent des informations de compte de gestion et un identifiant de serveur d'appariement.

11. Procédé d'appariement de dispositif d'affichage selon l'une quelconque des revendications précédentes, dans lequel le procédé comporte en outre de :
après réception des informations d'appariement, déterminer, par le dispositif d'affichage (100), si les informations d'appariement remplissent la condition suivante :
si un format des informations d'appariement est un format prédéterminé ; et
si l'identifiant de serveur d'appariement correspond à la liste de serveurs.

12. Procédé d'appariement de dispositif d'affichage selon l'une quelconque des revendications précédentes, dans lequel les premières informations comportent les informations d'appariement et un numéro de série du dispositif d'affichage (100), le procédé comportant en outre de :
après réception des premières informations, déterminer , par le serveur (200), si les premières informations remplissent la condition suivante :
si le temps de réception des premières informations dépasse une limite de temps d'appariement dans les informations d'appariement.

13. Système de gestion de dispositif d'affichage (10) comportant :
un dispositif d'affichage (100), connecté à un réseau de façon à pouvoir communiquer, le dispositif d'affichage (100) comportant :
un circuit de communication (120), connecté de manière à communiquer avec le réseau ;
un dispositif de stockage (140), pour stocker un numéro de série du dispositif d'affichage ;
un appareil de traitement (110), électriquement connecté au circuit de communication (120) et au dispositif de stockage (140) ; et
un dispositif d'éclairage (170), électriquement connecté à l'appareil de traitement (110),
dans lequel le circuit de communication (120) est configuré pour envoyer des premières informations et pour recevoir des informations d'appariement et des secondes informations,
le dispositif d'éclairage (170) est configuré pour afficher une indication d'appariement terminé, et
dans lequel l'appareil de traitement (110) est configuré pour déterminer si les informations d'appariement sont correctes, et en réponse à la détermination que les informations d'appariement sont correctes, l'appareil de traitement (110) est configuré pour générer les premières informations et pour transmettre les premières informations au réseau ou, en réponse à la détermination que les informations d'appariement ne sont pas correctes, l'appareil de traitement (110) est configuré pour mettre fin à un processus d'appariement du dispositif d'affichage (100).

14. Système de gestion de dispositif d'affichage selon la revendication 13, comportant en outre :
un serveur (200), connecté au dispositif d'affichage (100) de façon à pouvoir communiquer via une connexion de réseau, dans lequel le dispositif d'affichage (100) est configuré pour exécuter une instruction d'activation d'appariement, le dispositif d'affichage (100) est configuré pour attendre de recevoir les informations d'appariement en réponse à la transmission d'informations de demande d'appariement,
dans lequel le serveur (200), en réponse à la détermination que les premières informations sont valides, est configuré pour générer les secondes informations et transmettre les secondes informations au dispositif d'affichage (100),
dans lequel le dispositif d'affichage (100), en fonction des secondes informations, est configuré pour établir un canal de communication dédié entre le dispositif d'affichage (100) et le serveur (200), de manière à permettre la transmission de données ou d'instructions via le canal de communication dédié, en achevant ainsi l'opération d'appariement du dispositif d'affichage (100) avec le serveur (200).
